(19) Europäisches Patentamt
European Patent Office
Office européen des brevets

(11) Veröffentlichungsnummer: **0 375 653**
**A2**

# EUROPÄISCHE PATENTANMELDUNG

(21) Anmeldenummer: 89890332.3

(22) Anmeldetag: 27.12.89

(51) Int. Cl.⁵: **C04B 18/04, C04B 18/02, A62D 3/00**

(30) Priorität: 23.12.88 AT 3158/88
14.07.89 AT 1716/89

(43) Veröffentlichungstag der Anmeldung:
27.06.90 Patentblatt 90/26

(84) Benannte Vertragsstaaten:
AT BE CH DE ES FR GB GR IT LI LU NL SE

(71) Anmelder: **PERLMOOSER ZEMENTWERKE AKTIENGESELLSCHAFT**
**Operngasse 11**
**A-1043 Wien(AT)**

(72) Erfinder: **Jung, Fritz, Dr.**
**Innstrasse 15**
**A-1200 Wien(AT)**
Erfinder: **Concin, Roland, Dr.**
**Postfach 25**
**A-6322 Kirchbichl/Tirol(AT)**

(74) Vertreter: **Pfeifer, Otto, Dipl.-Ing. et al**
**Fleischmanngasse 9**
**A-1040 Wien(AT)**

(54) **Verfahren zur Behandlung von Abfallstoffen.**

(57) Beschrieben wird ein Verfahren zur Behandlung von Abfallstoffen, die gegebenenfalls umweltrelevante Schadstoffe und/oder organische Anteile enthalten, mit hydraulischen Bindemitteln, gegebenenfalls mit Schlakken, insbesondere Hochofenschlacke, Flugaschen, Tonen, insbesondere Bentoniten, mineralischen Zusatzstoffen, üblichen Zusatzmitteln, Zusätzen von Bitumen und/oder Steinkohlenteer und polymerbildenden Substanzen, das sich dadurch auszeichnet, daß durch Zusatz von alkalisch reagierenden Substanzen ein pH-Wert von über 10, vorzugsweise über 11 und insbesondere über 12 eingestellt wird, daß die gegebenenfalls vorbehandelten Abfallstoffe, erforderlichenfalls unter Wasserzusatz, mit hydraulischen Bindemitteln auf Basis eines Portlandzementklinkers, eines Tonerdezementklinkers und/oder eines hydraulischen Kalkes mit einem Gehalt an Calciumaluminaten und/oder Calciumaluminatferriten von mindestens 10 %, insbesondere von mehr als 15 %, stärker bevorzugt von mehr als 20 % und besonders bevorzugt von mehr als 30 %, versetzt werden und gegebenenfalls diese Mischungen entweder unmittelbar in Formkörper übergeführt werden oder in Kompaktkörper, aus denen dann durch Zumischung weiterer hydraulischer oder nichthydraulischer Bindemittel, gegebenenfalls unter Wiederholung der obigen Verfahrensschritte, Formkörper erhalten werden. Gegebenenfalls werden alkalisch reagierende Verbindungen an der Oberfläche der erhaltenen Formkörper anschließend in unlösliche, neutral reagierende Calciumsalze übergeführt.

EP 0 375 653 A2

EP 0 375 653 A2

## Verfahren zur Behandlung von Abfallstoffen

Die vorliegende Erfindung bezieht sich auf ein Verfahren zur Behandlung von Abfallstoffen, die gegebenenfalls umweltrelevante Schadstoffe und/oder organische Anteile enthalten, mit hydraulischen Bindemitteln.

In privaten Haushalten und bei industriellen Produktionsprozessen fallen zwangsläufig Stoffe an, die entsorgt werden müssen. Zusätzlich zu einer Minimierung der anfallenden Mengen wird auch angestrebt, die Abfallstoffe einer möglichst weitgehenden und umweltschonenden Wiederverwendung (Recycling) oder einer Verwertung zuzuführen. So können viele Stoffe, die aus einem Produktionsprozeß stammen, nach ihrer Nutzung in diesen Prozeß zurückgeführt und wieder zur Herstellung des gleichen Produktes verwendet werden. Daneben gibt es eine Vielzahl von natürlichen Stoffen oder von industriellen Produkten, die nach ihrer Nutzung nicht mehr wiederverwendet werden können, die jedoch als Sekundärstoff zur Herstellung eines anderen Produktes zur Gänze oder zumindest teilweise verwertet werden können. Trotz dieser Bemühungen, das Entstehen von Abfallstoffen zu vermeiden oder gebildete Abfallstoffe einer Wiederverwertung zuzuführen, fallen zwangsläufig große Mengen an Abfallstoffen an, die einer dauerhaften und sicheren Entsorgung bedürfen, insbesondere dann, wenn sie umweltrelevante Schadstoffe enthalten.

Es wurde bereits vorgeschlagen, Abfallstoffe, die umweltrelevante Schadstoffe enthalten, mit hydraulischen Bindemitteln, insbesondere Zement, zu versetzen und zu verfestigen. So wird beispielsweise in EP-A1-0 208 871 ein Verfahren zur Herstellung auslaugfester Agglomerate aus feinteiligen Abfallstoffen beschrieben, in welchem man ein hydraulisches Bindemittel in Wasser unter Zwangsmischen so lange aufschließt, bis es im wesentlichen nicht mehr sedimentiert, die so erhaltene wäßrige kolloidale Lösung mit den feinteiligen Abfallstoffen vereinigt und dabei den Wassergehalt des Gemisches auf eine agglomerierfähige Konsistenz einstellt, das Gemisch unter Bewegen agglomeriert und anschließend härtet.

In DE-B2-24 26 641 wiederum wird ein Verfahren zum Aufarbeiten von gefährlichem Abfall vorgestellt, wonach man den Abfall mit einem Aluminiumsilicat oder Aluminosilicat und mit einem Portlandzement in Gegenwart von Wasser zur Bildung einer Aufschlämmung mischt und diese zu einem gesteinsartigen Material abhärten läßt. In US-A-4 432 666 wird ein mehrstufiges Ver fahren zur Ablagerung von Sondermüll beschrieben, wonach der Sondermüll mit einem Bindemittel, das aus Zement bestehen kann, und mit Abbindewasser vermischt, das erhaltene Gemisch erstarren gelassen und das erstarrte Gemisch zu Aggregaten gebrochen wird, das Aggregat als Bindemittel für ein neues Gemisch verwendet wird und das erhaltene Gemisch im gießfähigen Zustand in Behältern gelagert und darin aushärten gelassen wird.

Eine langfristige sichere Einbindung von Schadstoffen konnte bisher nicht gewährleistet werden, da der Zementzusatz nicht in gezielter Weise vorgenommen wurde und daher die Elution von Schadstoffen in unterschiedlichem Ausmaße stattfand.

Häufig enthalten Abfallstoffe auch organische Bestandteile, wie Zucker, Sulfitablaugen, Kohlehydrate, Humine, andere organische Säuren, oder auch anorganische Bestandteile, etwa Phosphate, Zink- oder Bleiverbindungen, die den Erhärtungsvorgang von Zement stören können. Die mit dem Zementzusatz angestrebte Erhärtung erfolgte daher zumindest unregelmäßig und blieb häufig sogar ganz aus.

Es bestand daher die Aufgabe, ein Verfahren zur Behandlung von Abfallstoffen mit hydraulischen Bindemitteln aufzufinden, das eine dauerhafte, sichere Einbindung von Schadstoffen ermöglicht.

Zur Lösung dieser Aufgabe schlägt die Erfindung ein Verfahren zur Behandlung von Abfallstoffen, die gegebenenfalls umweltrelevante Schadstoffe und/oder organische Anteile enthalten, mit hydraulischen Bindemitteln, gegebenenfalls mit Schlacken, insbesondere Hochofenschlacke, Flugaschen, Tonen, insbesondere Bentoniten, mineralischen Zusatzstoffen, üblichen Zusatzmitteln, Zusätzen von Bitumen und/oder Steinkohlenteer und polymerbildenden Substanzen vor. Dieses Verfahren zeichnet sich dadurch aus, daß durch Zusatz von alkalisch reagierenden Substanzen ein pH-Wert von über 10, vorzugsweise über 11 und insbesondere über 12 eingestellt wird, daß die gegebenenfalls vorbehandelten Abfallstoffe, erforderlichenfalls unter Wasserzusatz, mit hydraulischen Bindemitteln auf Basis eines Portlandzementklinkers, eines Tonerdezementklinkers und/oder eines hydraulischen Kalkes mit einem Gehalt an Calciumaluminaten und/oder Calciumaluminatferriten von mindestens 10%, insbesondere von mehr als 15%, stärker bevorzugt von mehr als 20% und besonders bevorzugt von mehr als 30%, versetzt werden und gegebenenfalls diese Mischungen entweder unmittelbar in Form körper übergeführt werden oder in Kompaktkörper, aus denen dann durch Zumischung weiterer hydraulischer oder nichthydraulischer Bindemittel, gegebenenfalls unter Wiederholung der obigen Verfahrensschritte, Formkörper erhalten werden.

Zweckmäßig beträgt die Menge des zugesetzten hydraulischen Bindemittels, bezogen auf die Summe aus Bindemittel und trockenem Abfallstoff,3 bis 75%, insbesondere 6 bis 50 % und bevorzugt 10 bis 25 %.

Als besonders vorteilhaft hat es sich erwiesen,daß in den Abfallstoffen vorliegende, die Erhärtung der

2

zur Verfestigung zugesetzten hydraulischen Bindemittel störende Verbindungen in unschädliche Calciumverbindungen überführt werden. Diese Überführung in unschädliche Calciumverbindungen wird zweckmäßig durch Zusatz von Calciumnitrat, Calciumchlorid, Calciumoxid und/oder Calciumhydroxid vorgenommen, wobei vorteilhaft 1 bis 30 %, insbesondere 1 bis 20 %, besonders bevorzugt 1 bis 10 %, bezogen auf trockenen Abfallstoff und berechnet als CaO, zugesetzt werden.

Durch die Überführung in unschädliche Calciumverbindungen können gleichmäßige, gezielte Festigkeiten erreicht werden. In vielen Fällen, insbesondere bei einem Gehalt der Abfallstoffe an organischen Bestandteilen,ergibt sich dadurch auch eine wesentliche Verminderung des Wassergehaltes, was zu entsprechend höheren Festigkeiten führt.

Bei Schadstoffen, die Quecksilberverbindungen und/oder andere Schwermetallverbindungen enthalten, ist eine Ausfällung dieser Verbindungen in Form von unlöslichen Sulfiden zweckmäßig. Hiezu können den Abfallstoffen Alkali-und/oder Erdalkalisulfide, insbesondere Calciumsulfid, zugesetzt werden, oder die Abfallstoffe können mit Schwefelwasserstoff behandelt werden. Der Sulfidzusatz beträgt zweckmäßig 0,01 bis 5 %, insbesondere 0,05 bis 1%, bezogen auf trockenen Abfallstoff und angegeben als S.

Zur Ausfällung von in den Abfallstoffen enthaltenen Schwefelverbindungen in Form von unschädlichem Ettringit können metallisches Aluminiumpulver und/oder Aluminiumverbindungen, insbesondere Natriumaluminat, erforderlichenfalls in Kombination mit Entschäumern, zugesetzt werden. Bei Abfallstoffen mit besonders hohem Gehalt an Schwefelverbindungen werden zweckmäßig bis zu 35 % Aluminium bzw. eine dieser Aluminiummenge entsprechende Menge von Aluminium verbindungen und/oder Tonerdezement, besonders bevorzugt 1 bis 10 % Aluminium bzw. Aluminiumverbindungen und/oder Tonerdezement, zugesetzt. Diese frühzeitige erzwungene Ettringitbildung verhindert ein späteres Treiben des Bindemittels.

Zur Erhöhung der Dichtigkeit können oberflächenaktive Mittel und/oder Kunststoffe zugesetzt werden, wofür Hydrophobierungsmittel, wie Oleate, Stearate, Palmitate, Silikone,Silane,Entschäumer, und dergleichen in Mengen von 0,05 bis 5 %, vorzugsweise 0,5 bis 1 %, in Frage kommen, oder Kunststoffdispersionen auf Homopolymer-, Copolymer- oder Terpolymerbasis, beispielsweise Vinylacetatpolymere, Styrol-Butadien-Copolymere,Styrolacrylate, die in Mengen von 0,1 bis 15 %, vorzugsweise 1 bis 5 %, jeweils bezogen auf die Menge des hydraulischen Bindemittels, zugesetzt werden können,u.a. zur Erhöhung der Dichtigkeit können auch polymerbildende Substanzen, beispielsweise Epoxidharze, in Mengen von 0,1 bis 10 %, vorzugsweise 1 bis 5 % zugesetzt werden.

Bei Abfallstoffen mit hohen Gehalten an Schwefelverbindungen wird eine weitere Erhöhung der Sicherheit und Verbesserung der Erhärtung dadurch erreicht, daß Zemente und/oder hydraulische Kalke eingesetzt werden, die keine Sulfat-Erstarrungsregler (Dihydratgips, Halbhydratgips und/oder Anhydrit) enthalten bzw. nur einen gegenüber üblichen Verhältnissen stark herabgesetzten Anteil an Sulfat-Erstarrungsregler.

Weiterhin können zur Vermeidung von treibenden Reaktionen bei Abfallstoffen mit reaktionsfähigen Schwefelverbindungen Zemente und/oder hydraulische Kalke mit einem Gehalt an Calciumaluminaten von unter 3,5 %, insbesondere unter 3,0 %, besonders bevorzugt von 0 %, berechnet nach Bogue, zugesetzt werden.

Zur Herabsetzung der Diffusion von Schadstoffen hat sich ein Zusatz von Trass als vorteilhaft erwiesen. Eine weitere vorteilhafte Ausführungsform des erfindungsgemäßen Verfahrens sieht daher vor, daß ein Zement und/oder hydraulischer Kalk mit einem Trassgehalt von über 5%, insbesondere über 15%, besonders bevorzugt über 25%, zugesetzt wird.Ein Zusatz von Trass ist vorteilhaft, weil dadurch ein Alkalisilikattreiben infolge von Reaktionen des Zementes mit Glasbestandteilen im Abfallstoff mit Sicherheit vermieden werden kann.In gleicher Weise wirkt ein Zusatz von Flugasche.

Ein Zusatz von feinkörniger Kieselsäure, insbesondere aus Rückständen der Siliziumindustrie oder feinteilige gefällte Kieselsäure oder Kieselgur, kann gleichfalls die Diffusion von Schadstoffen erheblich herabsetzen. Eine vorteilhafte Ausführungsform des erfindungsgemäßen Verfahrens sieht daher den Einsatz eines Zementes und/oder hydraulischen Kalkes mit einem Gehalt an feinkörniger Kieselsäure in Mengen von über 1 %, insbesondere über 3 % und besonders bevorzugt über 8 % vor.

Wie bereits angeführt, stellen ein dichtes Gefüge und die Raumbeständigkeit der mit den Abfallstoffen hergestellten Proben die Voraussetzungen für einen sehr hohen Elutionswiderstand dar. Deshalb werden oberflächenaktive Substanzen, Kunststoffdispersionen und Hydrophobierungsmittel zugegeben. Diese Stoffe dienen auch dazu, allfällige organische Verbindungen mit störenden Einflüssen zu neutralisieren. Generell bewirken diese Zusatzmittel eine Reduktion des Wasserbedarfes beim Anmachen des Gemisches, treiben die allen- falls beim Anmachen eingeführte Luft aus, bewirken einen Porenverschluß und passivieren Einflüsse, welche die Raumbeständigkeit negativ beeinflussen.Als besonders wirksam haben sich in dieser Hinsicht Entschäumer zum Austreiben bzw. zur Vermeidung von Luft- und Gaseinschlüssen erwiesen.Alle diese Zusätze ergeben bei abgestimmter Zugabe und Kombination mit den Bindemitteln eine dichte und

3

raumbeständige Matrix.

Obgleich Schwermetalle in Zemente im allgemeinen gut eingebunden werden, erfolgt eine besonders gute Einbindung in Zemente oder Kalke, die viel Ettringit bilden, d.h., die viel Aluminat oder Aluminatferrit enthalten. Besonders gut geeignet sind Zemente wie PSZ 400 mit einem Gehalt an 12 $CaO.7Al_2O_3CaF_2$. Bei Einsatz dieser Zemente kann ein Zusatz von Alkalien, wie Natriumcarbonat, zweckmäßig sein, um Erhärtungsstörungen, beispielsweise durch die zufolge der Vorbehandlung der Abfallstoffe vorliegenden leichtlöslichen Calciumverbindungen, zu vermeiden. Als Zemente oder Kalke mit hohen Gehalten an Aluminaten bzw. Aluminatferrit gelten auch Zemente oder Kalke mit hohen Gehalten an Flugasche bzw. Hochofenschlacken. In diesem Falle stammen die Aluminate/Aluminatferrite aus diesen Zusatzstoffen. Besonders geeignet sind Kombinationen dieser Zusatzstoffe mit entsprechenden Zementen, wie PSZ 400. Auch ein direkter Zusatz von Ettringit kann zweckmäßig sein.

Eine vorteilhafte Ausführungsform der Erfindung sieht daher den Einsatz eines Zementes mit über 5 %, vorzugsweise über 10 % und besonders bevorzugt über 15 % $12CaO.7Al_2O_3$ bzw. $11 Cao.7Al_2O_3.CaF_2$ vor. Die erwähnte Herabsetzung der Calciumionenkonzentration der flüssigen Phase kann durch Zusatz von Alkaliverbindungen, insbesondere Alkalicarbonaten, vorzugsweise in einer Menge von 0,1 bis 5 %, erreicht werden.

Da die Löslichkeit von in den Zement eingebundenen Schadstoffen stark vom pH-Wert abhängig ist - bei niedrigen pH-Werten ist die Löslichkeit um Zehnerpotenzen höher - , kommt einer langfristigen Sicherstellung eines hohen pH-Wertes besonderes Interesse zu. Diese dauerhafte Aufrechterhaltung eines hohen pH-Wertes kann durch Zusatz eines Alkalidepots erfolgen, insbesondere in Form von Alkali- und/oder Erdalkaliverbindungen, insbesondere von grobkörnigem Portlandzementklinker, erhärtetem Zementstein, Gasbeton, Asbestzement, hartgebranntem Kalk oder Dolomit oder halbgebranntem Dolomit, Hochofenschlacke, Flugasche und/oder Alkalihydroxid. Je nach der Wirkung des Alkalidepots kann eine sehr unterschiedliche Zusatzmenge sich als erforderlich herausstellen, sodaß das Alkalidepot zweckmäßig in Mengen von 1 bis 75%, bezogen auf die Summe aus trockenem Abfallstoff und hydraulisches Bindemittel, zugesetzt wird.

Schwermetalle werden bei der Verfestigung mit Zement direkt in die Zementsteinphasen eingebunden und sind dort fixiert. Auch bei sehr günstigen Verhältnissen hinsichtlich der Raumbeständigkeit und der Gefügedichtheit kann es aber in Einzelfällen vorkommen, daß geringe Anteile der Schwermetalle nicht optimal fixiert sind und somit mobilisiert werden können (z.B.Hg).Durch eine Zugabe von selektiv bindend wirkenden Materialien wird eine zusätzliche Elutionsbarriere errichtet, die allfällig freiwerdende mobile Schadstoffe wieder fest bindet. Dieser Effekt wird auch durch ein ausreichendes Alkalidepot unterstützt und langfristig sichergestellt.

Zur weiteren Erhöhung des Einbindevermögens von Schadstoffen, insbesondere Schwermetallen und/oder störenden Ammoniumverbindungen, können daher Strukturmineralien, wie Zeolithe, insbesondere Klinoptilolith, und/oder organische bzw. anorganische Ionenaustauscher zugesetzt werden, wobei dieser Zusatz 1 bis 50%, vorzugsweise 5 bis 20 % Zeolith, bezogen auf hydraulisches Bindemittel, betragen kann. Ionenaustauscher auf der Basis von Polystyrol-Vinylharzen in anionischer oder kationischer Form können in Mengen von 0,5 bis 10%, bezogen auf hydraulisches Bindemittel, zugesetzt werden.

Vorteilhaft erfolgt die Überführung der Mischungen in Formkörper unter Druck und/oder Temperatureinwirkung, wobei mit zunehmendem Erhärtungsalter der Schadstoff/Zementmischung die Einbindung der Schadstoffe besser wird. Es ist daher von Vorteil, die Erhärtung durch Wärmezufuhr zu beschleunigen.

Wie bereits erwähnt, wird die Einbindung der Schadstoffe mit absinkendem Wassergehalt der Schadstoff/Zementmischung verbessert. Gewünschtenfalls können daher auch Verflüssiger eingesetzt werden, wodurch die Dichtigkeit und die Festigkeit erhöht werden können.

Bei weiteren Untersuchungen von Form- oder Kompaktkörpern hat sich in der Praxis gezeigt,daß die gegebenenfalls vorbehandelten und mit den Bindemitteln hergestellten Formkörper bei Elutionsversuchen zu Beginn einen relativ hohen pH-Wert aufweisen. Dies geht auf das bei der Erhärtung von beispielsweise Zement freiwerdende Calciumhydroxid an der Oberfläche der Formkörper zurück. Ähnliches wird auch bei sehr jungem, frischem Beton von üblicher Zusammensetzung beobachtet. Dieses Calciumhydroxid ist neben anderen alkalisch reagierenden Verbindungen u.a. für die langfristige Sicherung der Einbindung der Schadstoffe, insbesondere der Schwermetalle, unbedingt erforderlich.

Für die Lagerung der Formkörper auf einer ungeschützten Deponie stellen das bei der Erhärtung freiwerdende Calciumhydroxid sowie andere alkalisch reagierende Verbindungen im Hinblick auf allfällig einwirkendes Niederschlagswasser ein Problem dar, da die bei Elutionsversuchen von nach bekannten Verfahren hergestellten Formkörpern zu Beginn gemessenen pH-Werte über den für das Einleiten in öffentliche Wässer vorgeschriebenen pH-Werten liegen können.

Da die alkalisch reagierenden Verbindungen aber für die verbesserte Einbindung der Schadstoffe von

EP 0 375 653 A2

großer Bedeutung sind, wird nunmehr vorgeschlagen, die alkalisch reagierenden Verbindungen an der Oberfläche der Formkörper, insbesondere das Calciumhydroxid, durch Einwirkung von Flüssigkeiten, wie etwa Kohlensäure, Flußsäure, Oxalsäure, Lösungen von Carbonaten bzw. Bicarbonaten, Magnesiumsilicofluorid und dergleichen oder von Gasen, beispielsweise von Kohlendioxid, in vorteilhafter Weise in kurzer Zeit in unlösliche, neutral reagierende Calciumsalze zu überführen und/oder die Formkörper einem $CO_2$-hältigen Abgasstrom auszusetzen und/oder sie mit einer dichtenden, die Wasseraufnahme herabsetzenden Oberflächenbehandlung zu versehen.

Eine weitere Ausgestaltung der Erfindung sieht daher ein Verfahren zur Behandlung von organische und/oder anorganische umweltrelevante Verbindungen enthaltenden Abfallstoffen, die gegebenenfalls vorbehandelt sind, gegebenenfalls mit Bindemittel versetzt worden sind und deren Wassergehalt gegebenenfalls, beispielsweise mit Hilfe einer Filterpresse oder einer ähnlichen Vorrichtung, reduziert worden ist, vor, das dadurch gekennzeichnet ist, daß dieses Gemisch zu Formkörpern umgeformt, insbesondere gepreßt wird und die alkalisch reagierenden Verbindungen an der Oberfläche dieser Formkörper, insbesondere das Calciumhydroxid, durch Einwirkung von Flüssigkeiten z.B. Kohlensäure, Flußsäure, Oxalsäure, Lösungen von Carbonaten bzw. Bicarbonaten, Magnesiumsilikofluorid usw. oder von Gasen, z.B. Kohlendioxid, in unlösliche, neutral reagierende Calciumsalze übergeführt werden, z.B. in Calciumcarbonat, Calciumfluorid, Calciumoxalat und dgl. und/oder die Formkörper einem $CO_2$-haltigen Abgasstrom ausgesetzt werden und/oder die Formkörper mit einer dichtenden, die Wasseraufnahme herabsetzenden Oberflächenbehandlung, wie Tränkung, Anstrich, Überzug versehen werden, bestehend beispielsweise aus Kunststoff, Wachs, Bitumen, Imprägnierungsmittel, Hydrophobierungsmittel und dgl.

Diese Ausführungsform wird vorteilhafterweise so angewandt, daß die Umwandlung der alkalisch reagierenden Verbindungen an der Oberfläche der Formkörper bei erhöhten Temperaturen über 30° C, insbesondere über 50° C und besonders bevorzugt über 70° C erfolgt.

Durch Anwenden dieser Ausführungsform des erfindungsgemäßen Verfahrens wird von Beginn einer Elution an, beispielsweise durch allfällig einwirkendes Niederschlagswasser, der für das Einleiten in öffentliche Wässer vorgeschriebene pH-Wert nicht überschritten, wobei gleichzeitig der für die langfristig sichere Einbindung der Abfallstoffe aber notwendige hohe pH-Wert im Inneren der Formkörper aufrecht erhalten wird und ein Zusetzen von grobkörnigen Alkalidepot-Körpern zur dauerhaften Aufrechterhaltung eines hohen pH-Wertes in bekannter Weise erfolgen kann, wodurch die langfristige Einbindung der Schadstoffe auch nach Durchführung der erfindungsgemäßen Oberflächenbehandlung der Formkörper gesichert bleibt.

Die Anwendung des erfindungsgemäßen Verfahrens kann in großem Rahmen erfolgen und reicht von der Bodenstabilisierung, in welcher etwa 4 bis 5 % Zement zugesetzt werden, bis zur Betonindustrie, wo bis zu 75 % Zementzusatz zweckmäßig sein können. Bestehende Altdeponien, die einer Sanierung unterworfen werden müssen, können mit Dichtwänden, Schmalwänden, Schlitzwänden oder entweder vor Anlage der Deponie und/oder nachträglich ausgeführte Horizontalisolierungen umfaßt werden.Die Abfallstoffe können nach der mixed in place (in situ) -oder mixed in blend (ex situ) - Methode mit dem Bindemittel vermischt werden. Das Einarbeiten des Bindemittels kann hiebei trocken oder in Form eines Bindemittel/Wassergemisches erfolgen.Das Bindemittel wirkt hiebei als Schadstofffänger.

Die nachfolgenden Beispiele sollen die Erfindung näher erläutern.

BEISPIEL 1:

Verschiedene Abfallstoffe wurden mit jeweils 25 % Zement und ausreichend Wasser vermischt und aus der Mischung wurden Formkörper mit den Abmessungen 10 x 10 x 10 (cm) angefertigt. Dabei traten so schwere Erhärtungsstörungen auf, daß die Probekörper auch nach 3 Tagen Lagerung bei Normklima nur mit Mühe entformt werden konnten. Nach weiteren 4 Tagen Lagerung bei Normklima wurden sie unter Wasser gelegt. Dabei sind alle Prüfkörper, ausgenommen der Vergleichskörper mit Sand 0/1 mm, nach 2 - 3 Tagen zerfallen.

Die Abfallstoffe wurden daraufhin mit verschiedenen Calciumverbindungen laut Tabelle 1 versetzt und nach zweistündiger Lagerungsdauer wieder mit 25 % Zement gemischt. Dabei ergaben sich gute Festigkeiten und hohe Wasserbeständigkeit. Die Werte sind in Tabelle 1 zusammengestellt.

TABELLE 1:

| Abfallstoff mit Schadstoff | 1 | | 2 | | 3 | | 4 | | ohne Abfallstoff/mit Quarzsand 0/1mm |
|---|---|---|---|---|---|---|---|---|---|
| | 0,5 % $Zn^{2+}$ | | 1,0 % $PO_4^{3-}$ | | 0,5 % Zucker | | Humine | | |
| Vorbehandlung mit | nein<br>- | ja<br>5%<br>Ca-nitrat<br>gerechnet<br>als CaO | nein<br>- | ja<br>11%<br>$Ca(OH)_2$<br>gerechnet<br>als CaO | nein<br>- | ja<br>16%<br>$CaCl_2$<br>gerechnet<br>als CaO | nein<br>- | ja<br>21%<br>CaO | nein<br>- |
| Erstarren nach Druckfestigkeit ($N/mm^2$) nach 7 d<br>Kochprobe | 1-2d<br>+)<br>- | 5 h<br>20<br>best. | 1-2d<br>+)<br>- | 4h/30<br>22<br>best. | 1-2d<br>+)<br>- | 3h/30<br>18<br>best. | 1-2d<br>+)<br>- | 5h/30<br>16<br>best. | 4h/15<br>21<br>best. |
| best. = bestanden | | | | | | | | | |

+) keine Festigkeit, Proben lassen sich mit der Hand zerdrücken und zerfallen nach einigen Tagen Wasserlagerung

Beispiel 2:

Ein Filterkuchen F 1 aus der Abwasseraufbereitung der Rauchgaswäsche einer Sondermüllverbrennungsanlage mit einem Gehalt an Quecksilberverbindungen von 0,30 %, angegeben als Hg, wurde mit 25 % PZ 375 (H) verfestigt und es wurden aus dieser Mischung Probekörper für Elutionsmessungen angefertigt. Parallel dazu wurde eine zweite Probe des Filterkuchens mit 0,04% bzs. 0,2% CaS, gerechnet als Sulfid, mit Wasser vermischt und nach 1-stündiger Stehzeit in gleicher Weise wie bei den ersten Proben mit 25 % PZ 375 (H) vermischt und zu Elutionskörpern verarbgeitet.

Weiterhin wurden aus einer Asche F 2 aus einer Sondermüllverbrennungsanlage mit einem Gehalt an 1,5% Bleiverbindungen, angegeben als PbO, ohne bzw.mit Vorbehandlung mit 0,5 bzw. 1,8% CaS, gerechnet als Sulfid, Elutionskörper hergestellt.

Die Messungen ergaben folgende Werte:

| | | Elution |
|---|---|---|
| Filter F 1 | unbehandelt | 100 % (Hg) |
| | behandelt mit 0,04 % CaS +) | 13 % (Hg) |
| | behandelt mit 0,2 % CaS +) | 2 % (Hg) |
| Asche F 2 | unbehandelt | 100% (Pb) |
| | behandelt mit 0,5 % CaS +) | 17% (Pb) |
| | behandelt mit 1,8 % CaS +) | 1% (Pb) |

+) Mengen jeweils angegeben als Sulfid

Beispiel 3:

Eine Asche aus einer Hausmüllverbrennungsanlage mit einem Gehalt von 10,5% Schwefelverbindungen, angegeben als $SO_3$, wurde mit 30% Zement gemischt und daraus wurden Formkörper mit den Abmessungen 10 x 10 x 10 (cm) hergestellt. Dabei wurden verschiedene Zemente eingesetzt, und es wurde zur Ausfällung der in der Asche vorhandenen Schwefelverbindungen in einigen Versuchen metallisches Aluminiumpulver, Natriumaluminat und Tonerdezement zugesetzt. Die Probekörper wurden nach einem Tag entformt und lagerten bis zum Prüfdatum unter Wasser. Dabei wurden folgende Resultate erzielt:

| Druckfestigkeit (N/mm$^2$) nach 6-monatiger Wasserlagerung | | | | |
|---|---|---|---|---|
| Vorbehandlung der Asche | keine | mit 6% Al-Pulver | mit 19 % Na-aluminat | mit 29% Tonerdezement |
| Mischung der Asche mit: 30% PZ 375 (H) | n.m. Prüfkörper zerfallen | 15 (zahlreiche Risse) | 19 (1 Riß) | 11 (mehrere Risse) |
| 30% hydr.Kalk | -"- | 8 (zahlreiche Risse) | 11 | 6 (zahlreiche Risse) |
| 30% Zement mit Aluminatgehalt 3,2% | -"- | 21 (1 Riß) | 25 | 29 |
| 30% Zement mit Aluminatgehalt 0 % | n.m. Prüfkörper starke Risse | 27 | 30 | 33 |
| 30% Zement ohne Gipsgehalt | -"- | 22 | 25 | 31 |
| 30% PSZ 400 | -"- | 15 (5 Risse) | 14 (7 Risse) | n.b. |
| 30% PSZ 400 ohne Gipsgehalt | -"- | 21 (1 Riß) | 26 | n.b. |
| 30% PSZ 400 mit Gehalt von 5% Soda | 5 (zahlreiche Risse) | 39 | 38 | n.b. |
| n.m. = nicht meßbar | | | | |
| n.b. = nicht bestimmt | | | | |

Beispiel 4:

Eine Flugasche aus einer Sondermüllverbrennungsanlage wurde mit 35% PZ 375 (H) vermischt und zu Formkörpern für Elutionsmessungen verfestigt. Die Asche enthielt 3,2% Zinkverbindungen, angegeben als ZnO. Durch eine Vorbehandlung mit Ca(OH)$_2$ war eine allfällige Störung der Zementerhärtung ausgeschaltet worden.

Ein Teil der Probekörper wurde mit Alkalidepot entsprechend der Tabelle 1 versehen. Die Probekörper lagerten sodann während 8 Monaten im Freien (der Witterung, insbesondere dem Regen ausgesetzt). Die Ergebnisse der Elutionsmessungen sind nachstehend wiedergegeben. Es geht daraus hervor, daß die niedrige Elution, langfristig gesehen, durch die infolge des Alkalidepots bewirkte Aufrechterhaltung des hohen pH-Wertes gut gesichert werden kann. Dabei ist von Interesse, daß die Probekörper ohne Alkalidepot zur Zeit der Elutionsmessungen vollständig durchkarbonatisiert waren, währenddessen die Karbonatisierungstiefe bei den Probekörpern mit Alkalidepot unter 1 mm lag. (Phenolphthalein-Test)

| Alkalidepot (Mengenangaben bezogen auf Summe Bindemittel + Abfallstoffe) | Elution (Zn$^{2+}$) nach der 8-monatigen Freilagerung |
|---|---|
| keines | 100 % |
| mit 20% PZ-Klinker | 2 % |
| mit 60% Zementstaubfeinanteil aus einer Betonrecyclinganlage | 3 % |
| mit 30% kalkreicher Flugasche | 4 % |

Beispiel 5:

Ein Filterkuchen aus der Abwasseraufbereitung eines chemischen Industriewerkes mit 0,05% Nickelverbindungen, angegeben als Ni, wurde mit 40 % Zement bei teilweisem Ersatz des Zementes durch Trass bzw. Microsilica vermischt, und daraus wurden Formkörper für Elutionsmessungen angefertigt. Die Probekörper lagerten 21 Tage bei Normklima. Die dann durchgeführten Elutionsmessungen brachten folgende Resultate:

| Zusatz, bezogen auf Zementgewicht | Elution (Ni) im Alter von 21 Tagen |
|---|---|
| 0 % | 100 % |
| 7 % Trass | 43 % |
| 19 % Trass | 29 % |
| 26 % Trass | 17 % |
| 5% Microsilica | 46 % |
| 10 % Microsilica | 21 % |

Beispiel 6:

Eine Flugasche aus einer Sondermüllverbrennungsanlage mit einem Gehalt an Chromverbindungen von 1.200 ppm, angegeben als Cr, wurde mit 17 % PZ 375 (F) gemischt, und es wurden daraus Formkörper für Elutionsmessungen angefertigt. Nach verschiedenen Lagerungen wurde die Elution gemessen. Die Resultate waren:

| Lagerung | Elution (Cr) |
|---|---|
| 3 Tage bei Normklima | 100 % |
| 21 Tage bei Normklima | 1 % |
| 1 Tag bei 60° C | 7 % |
| 3 Tage bei 60° C | 1,1 % |

Die Lagerung bei hoher Temperatur hat danach zu einer wesentlich rascheren Einbindung des Chroms geführt.

Beispiel 7:

Ein Filterkuchen Fl aus der Abwasseraufbereitung der Rauchgaswäsche einer Sondermüllverbrennungsanlage mit einem Gehalt an Quecksilberverbindungen von 0,3% angegeben als Hg, wurde mit 25% PZ 375-(H) verfestigt und es wurden aus dieser Mischung Probekörper für Elutionsmessungen angefertigt. Parallel dazu wurde eine zweite Probe des Filterkuchens mit 25% PZ 375(H) und Wasser vermischt und anschließend 5%, 15% und 30% Zeolith zugegeben. Mit diesen Mischungen wurden Formkörper für die Elutionsmessungen hergestellt.

In gleicher Weise wurde eine Asche F2 aus einer Sondermüllverbrennungsanlage mit einem Gehalt an 0,2% Cadmiumverbindungen, angegeben als CdO, behandelt und anschließend die Eluierbarkeit bestimmt.

Die Ergebnisse sind in der nachfolgenden Tabelle zusammengestellt:

| Filterkuchen F1 | Elution |
|---|---|
| unbehandelt | 100 % Hg |
| mit 5 % Zeolith | 30 % Hg |
| mit 15 % Zeolith | 11 % Hg |
| mit 30 % Zeolith | 1,5% Hg |
| Asche F2 | |
| unbehandelt | 100 % Cd |
| mit 5 % Zeolith | 25 % Cd |
| mit 15 % Zeolith | 5 % Cd |
| mit 30 % Zeolith | 0,3 % Cd |

## Beispiel 8

Ein Filterkuchen F1 aus der Abwasseraufbereitung der Rauchgaswäsche einer Sondermüllverbrennungsanlage mit einem Gehalt an Quecksilberverbindungen von 0,3%, angegeben als Hg, wurde mit 25% PZ 375 (H) verfestigt und es wurden aus dieser Mischung Probekörper für Elutionsmessungen angefertigt. Parallel dazu wurde eine zweite Probe des Filterkuchens mit 25% PZ 375(H) und Wasser vermischt und anschließend 5%, 15% und 30% Zeolith sowie jeweils 5% eines stark sauren Kationenaustauschers (Type I, Fa.Merck) zugegeben. Mit diesen Mischungen wurden Formkörper für die Elutionsmessungen hergestellt.

In gleicher Weise wurde eine Asche F2 aus einer Sondermüllverbrennungsanlage mit einem Gehalt an 0,2% Cadmiumverbindungen, angegeben als CdO, behandelt und anschließend die Eluierbarkeit bestimmt.

Die Ergebnisse sind in der nachfolgenden Tabelle zusammengestellt:

| Filterkuchen F1 | Elution |
|---|---|
| unbehandelt | 100 % |
| mit 0 % Zeolith und 5 % Ionenaustauscher | 17 % Hg |
| mit 5 % Zeolith und 5 % Ionenaustauscher | 10 % Hg |
| mit 15 % Zeolith und 5 % Ionenaustauscher | 2 % Hg |
| mit 30 % Zeolith und 5 % Ionenaustauscher | 0,1% Hg |
| Asche F2 | |
| unbehandelt | 100 % Cd |
| mit 0 % Zeolith und 5% Ionenaustauscher | 14 % Cd |
| mit 5 % Zeolith und 5% Ionenaustauscher | 9 % Cd |
| mit 15% Zeolith und 5 % Ionenaustauscher | 1 % Cd |
| mit 30% Zeolith und 5 % Ionenaustauscher | 0,05% Cd |

## Beispiel 9:

Abfallstoffe mit die Erhärtung störenden Bestandteilen wurden mit oberflächenaktiven Verbindungen, Kunststoffdispersionen,Entschäumern und polymerbildenden Verbindungen in Anteilen zwischen 0,05 und 5 Prozent versetzt, intensiv während 1 bis 10 Minuten vermischt und nach einer Ruhezeit von 2 bis 60 Minuten mit Calciumverbindungen analog Beispiel 1 versetzt und neuerlich intensiv vermischt. Anschließend wurden Probekörper hergestellt und Elutionsversuche durchgeführt.

Die Ergebnisse einiger Versuchsansätze sind in der nachfolgenden Tabelle dargestellt:

Abfallstoff: Flugasche aus einer Sondermüllverbrennung,

Erhärtungsstörung: durch Gehalt an 0,5% Zink

Behandlung:

1. Vorbehandlung wie unten angeführt

2. Hauptbehandlung mit 25% Zementzugabe und 5% Calciumverbindung ($CaNO_3$)

3. Herstellung der Elutionskörper

| Art der Vorbehandlung | Erstarren nach | Kochprobe 24 Stunden 100° C | Druckfestig. N/mm² nach 7 d | Elution % | | |
|---|---|---|---|---|---|---|
| | | | | Hg | Cd | Pb |
| ohne Vorbehandlung | 5 h | bestanden | 20 | 100 | 100 | 100 |
| mit 0,7 % Hydrophobierungsmitel (Natriumoleat) | 4 h | bestanden | 19 | 96 | 85 | 42 |
| mit 2,5% Dispersionspulver (Polyvinylacetat-Cop.) | 5 h | bestanden | 28 | 71 | 56 | 45 |
| Mit 0,08% Entschäumer | 5 h | bestanden | 27 | 73 | 66 | 48 |
| mit 1% Dispersionspulver und 0,07% Entschäumer | 3 h | bestanden | 32 | 58 | 41 | 45 |
| mit 8,5% Epoxidharz und 0,05% Entschäumer | 0,5 h | bestanden | 18 | 26 | | 9 |

EP 0 375 653 A2

Beispiel 10:

Die Oberfläche von Formkörpern, welche aus einem Filterkuchen aus einem mit Kalkhydrat, Eisenchloridlösung und Reagentien zur Fällung der Schwermetalle behandelten Abfallschlamm unter Bindemittelzusatz (Zement) erzeugt wurden, wurden mit den in der nachfolgenden Tabelle angeführten chemischen Verbindungen bzw. Oberflächenbehandlungsmitteln behandelt. Nach erfolgter Oberflächenbehandlung wurden diese Formkörper (Zylinder mit 10 cm Länge und 10 cm Durchmesser) in Leitungswasser (pH 8) gelagert. Das Lagerungswasser (bei allen Versuchen gleiche Volumina) wurde täglich gewechselt und der pH-Wert des Wassers nach der in der Tabelle angeführten Lagerdauer der Formkörper im Wasser gemessen (Bestimmung der Auswirkung von Niederschlagswasser auf die jungen Formkörper). Zum Vergleich wurde ein nicht oberflächenbehandelter Formkörper gleichen Ausmaßes denselben Lagerungsbedinungen unterworfen.

Wie aus der Tabelle ersichtlich, werden aus den erfindungsgemäßen oberflächenbehandelten Formkörpern keine bzw. nur wenig alkalisch reagierende Verbindungen an das Umgebungswasser abgegeben; hingegen ist bei dem nicht oberflächenbehandelten Formkörper eine mehrere Tage andauernde Löslichkeit der alkalisch reagierenden Verbindungen zu erkennen.

TABELLE:

| Art der Oberflächenbehandlung | Temperatur während der Behandlung (°C) | pH-Wert des Lagerungswassers nach n Tagen Lagerung der Formkörper | | |
|---|---|---|---|---|
| | | 1 | 3 | 5 |
| unbehandelt | - | 11,9 | 10,1 | 8,8 |
| mehrmaliges Tauchen d. Formkörpers in eine Carbonatlösung | 35 | 9,1 | 8,5 | 8,3 |
| Aufsprühen einer Kunststoffdispersion | 48 | 8,0 | 8,0 | 8,0 |
| Wachs-Heißauftrag | 80 | 8,0 | 8,0 | 8,0 |
| Lagerung im $CO_2$-Gasstrom | 32 | 8,2 | 8,1 | 8,1 |

Ansprüche

1. Verfahren zur Behandlung von Abfallstoffen, die gegebenenfalls umweltrelevante Schadstoffe und/oder organische Anteile enthalten, mit hydraulischen Bindemitteln, gegebenenfalls mit Schlacken, insbesondere Hochofenschlacke, Flugaschen, Tonen, insbesondere Bentoniten, mineralischen Zusatzstoffen, üblichen Zusatzmitteln, Zusätzen von Bitumen und/oder Steinkohlenteer und polymerbildenden Substanzen, dadurch gekennzeichnet, daß durch Zusatz von alkalisch reagierenden Substanzen ein pH-Wert von über 10, vorzugsweise über 11 und insbesondere über 12 eingestellt wird, daß die gegebenenfalls vorbehandelten Abfallstoffe, erforderlichenfalls unter Wasserzusatz, mit hydraulischen Bindemitteln auf Basis eines Portlandzementklinkers, eines Tonerdezementklinkers und/oder eines hydraulischen Kalkes mit einem Gehalt an Calciumaluminaten und/oder Calciumaluminatferriten von mindestens 10 %, insbesondere von mehr als 15 %, stärker bevorzugt von mehr als 20 % und besonders bevorzugt von mehr als 30 %, versetzt werden und gegebenenfalls diese Mischungen entweder unmittelbar in Formkörper übergeführt werden oder in Kompaktkörper, aus denen dann durch Zumischung weiterer hydraulischer oder nichthydraulischer Bindemittel, gegebenenfalls unter Wiederholung der obigen Verfahrensschritte, Formkörper erhalten werden.

2. Verfahren nach Anspruch 1, dadurch gekennzeichnet, daß die Menge des zugesetzten hydraulischen Bindemittels, bezogen auf die Summe trockener Abfallstoff- und Bindemittel, 3 bis 75 %, insbesondere 6 bis 50 % und bevorzugt 10 bis 25 % beträgt.

3. Verfahren nach Anspruch 1, dadurch gekennzeichnet, daß in den Abfallstoffen vorliegende, die Erhärtung der zur Verfestigung zugesetzten hydraulischen Bindemittel störende Verbindungen in unschädliche Calciumverbindungen übergeführt werden.

4. Verfahren nach Anspruch 3, dadurch gekennzeichnet, daß die Überführung in unschädliche Calciumverbindungen durch Zusatz von Calciumnitrat, -chlorid, -oxid und/oder -hydroxid vorgenommen wird.

5. Verfahren nach Anspruch 4, dadurch gekennzeichnet, daß 1 - 30 %, insbesondere 1 - 20 %, besonders bevorzugt 1 - 10 %, bezogen auf trockenen Abfallstoff, Calciumverbindungen, angegeben als CaO, zugesetzt werden.

6. Verfahren nach einem der Ansprüche 1 bis 5, dadurch gekennzeichnet, daß zur Ausfällung von Quecksilberverbindungen und/oder anderen Metallverbindungen in Form von unlöslichen Sulfiden Alkaliund/oder Erdalkalisulfide, insbesondere CaS, zugesetzt werden und/oder den Abfallstoffen Schwefelwaserstoff zugeführt wird.

7. Verfahren nach Anspruch 6, dadurch gekennzeichnet, daß der Sulfidzusatz 0,01 bis 5 %, insbesondere 0,05 bis 1 %, bezogen auf trockenen Abfallstoff, angegeben als S, beträgt.

8. Verfahren nach einem der Ansprüche 1 bis 7, dadurch gekennzeichnet, daß zur Ausfällung von Schwefelverbindungen in Form von unschädlichem Ettringit metallisches Aluminiumpulver und/oder Aluminiumverbindungen, insbesondere Natriumaluminat, erforderlichenfalls in Kombination mit Entschäumern, zugesetzt werden.

9. Verfahren nach Anspruch 8, dadurch gekennzeichnet, daß bei Abfallstoffen mit besonders hohem Gehalt an Schwefelverbindungen bis zu 35 % Aluminium bzw. eine dieser Aluminiummenge entsprechende Menge von Aluminiumverbindungen und/oder Tonerdezement zugesetzt werden, bezogen auf trockenen Abfallstoff.

10. Verfahren nach Anspruch 9, dadurch gekennzeichnet, daß bei Abfallstoffen mit besonders hohem Gehalt an Schwefelverbindungen 1 bis 10 % Aluminium bzw. eine dieser Aluminiummenge entsprechende Menge von Aluminiumverbindungen und/oder Tonerdezement zugesetzt werden, bezogen auf trockenen Abfallstoff.

11. Verfahren nach einem der Ansprüche 1 bis 10, dadurch gekennzeichnet, daß die Abfallstoffe mit Alkaliverbindungen, insbesondere Alkalicarbonaten oder Alkalichloriden, und/oder mit Erdalkalichloriden vorbehandelt werden, insbesondere mit 0,1 bis 10%, besonders bevorzugt 0,3 bis 5 % und speziell bevorzugt 0,5 bis 2 %, bezogen auf trockenen Abfallstoff.

12. Verfahren nach einem der Ansprüche 1 bis 11, dadurch gekennzeichnet, daß zur Erhöhung der Dichtigkeit oberflächenaktive Mittel und/oder Kunststoffe zugesetzt werden.

13. Verfahren nach Anspruch 12, dadurch gekennzeichnet, daß Hydrophobierungsmittel, wie Oleate, Stearate, Palmitate, Silikone, Silane und/oder Entschäumer und dergleichen, in Mengen von 0,05 bis 5 %, vorzugsweise 0,5 bis 1 %, zugesetzt werden, bezogen auf trockenen Abfallstoff.

14. Verfahren nach Anspruch 12, dadurch gekennzeichnet, daß Kunststoffdispersionen auf

14

Homopolymer-, Copolymer- oder Terpolymerbasis, beispielsweise Vinylacetatpolymere, Styrol-Butadien-Copolymere,Styrolacrylate, in Mengen von 0,1 bis 15 %, vorzugsweise 1 bis 5%, zugesetzt werden,bezogen auf trockenen Abfallstoff.

15. Verfahren nach Anspruch 12, dadurch gekennzeichnet, daß polymerbildende Substanzen, beispielsweise Epoxidharze, in Mengen von 0,1 bis 10 %, vorzugsweise 1 bis 5 %, zugesetzt werden, bezogen auf trockenen Abfallstoff.

16. Verfahren nach einem der Ansprüche 1 bis 15, dadurch gekennzeichnet, daß zur schadlosen Einbindung von in den Abfallstoffen vorliegenden reaktionsfähigen Schwefelverbindungen Zemente und/oder hydraulische Kalke eingesetzt werden, die keine Sulfat-Erstarrungsregler (Dihydratgips, Halbhydratgips und/oder Anhydrit) enthalten bzw. nur einen gegenüber üblichen Verhältnissen stark herabgesetzten Anteil an Erstarrungsregler.

17. Verfahren nach einem der Ansprüche 1 bis 16, dadurch gekennzeichnet, daß zur Vermeidung von treibenden Reaktionen bei Abfallstoffen mit reaktionsfähigen Schwefelverbindungen Zemente und/oder hydraulische Kalke mit einem Gehalt an Kalziumaluminaten von unter 3,5 %, insbesondere unter 3,0 %, besonders bevorzugt von 0 %, berechnet nach Bogue, zugesetzt werden.

18. Verfahren nach einem der Ansprüche 1 bis 17, dadurch gekennzeichnet, daß ein Zement und/oder hydraulischer Kalk mit einem Trassgehalt von über 5 %, insbesondere über 15 %, besonders bevorzugt über 25 %, zugesetzt wird.

19. Verfahren nach einem der Ansprüche 1 bis 18, dadurch gekennzeichnet, daß ein Zement und/oder hydraulischer Kalk mit einem Gehalt an feinkörniger Kieselsäure, beispielsweise Rückstände der Siliziumindustrie oder gefällte Kieselsäure, in Mengen von über 1 %, insbesondere über 3 % und besonders bevorzugt über 8 % eingesetzt wird.

20. Verfahren nach einem der Ansprüche 1 bis 19, dadurch gekennzeichnet, daß als Zement ein Zement mit über 5 %, vorzugsweise über 10 % und besonders bevorzugt über 15 % $12CaO.7Al_2O_3$ bzw. $11 CaO.7Al_2O_3.CaF_2$ eingesetzt wird.

21. Verfahren nach einem der Ansprüche 1 bis 20, dadurch gekennzeichnet, daß zur Herabsetzung der Calciumkonzentration der flüssigen Phase Alkaliverbindungen, insbesondere Alkalikarbonate,vorzugsweise in einer Menge von 0,1 bis 5 %, zugesetzt werden.

22. Verfahren nach einem der Ansprüche 1 bis 21, dadurch gekennzeichnet, daß zur dauerhaften Aufrechterhaltung eines hohen pH-Wertes ein Alkalidepot zugesetzt wird, insbesondere in Form von Alkali- und/oder Erdalkaliverbindungen, insbesondere von grobkörnigem Portlandzementklinker, erhärtetem Zementstein, Gasbeton, Asbestzement, hartgebranntem Kalk oder Dolomit oder halbgebranntem Dolomit, Hochofenschlacke, Flugasche, und/oder Alkalihydroxid.

23. Verfahren nach Anspruch 22, dadurch gekennzeichnet, daß das Alkalidepot in Mengen von 1 bis 75 %, bezogen auf die Summe aus trockenem Abfallstoff und hydraulischem Bindemittel, zugesetzt wird.

24. Verfahren nach einem der Ansprüche 1 bis 23, dadurch gekennzeichnet, daß zur weiteren Verbesserung des Einbindevermögens der Schadstoffe und der Erhärtung des Bindemittels Alkali- und/oder Erdalkalichloride in Mengen von 0,1 bis 10 %, insbesondere 0,3 bis 5 %, besonders bevorzugt 0,5 bis 2 %, bezogen auf Bindemittel, zugesetzt werden.

25. Verfahren nach einem der Ansprüche 1 bis 24, dadurch gekennzeichnet, daß zur weiteren Erhöhung des Einbindevermögens von Schadstoffen, insbesondere Schwermetallen und/oder störenden Ammoniumverbindungen, Strukturmineralien, wie Zeolithe, insbesondere Klinoptilolith, und/oder organische bzw. anorganische Ionenaustauscher zugesetzt werden.

26. Verfahren nach Anspruch 25, dadurch gekennzeichnet, daß 1 bis 50 %, vorzugsweise 5 bis 20 % Zeolith,bezogen auf hydraulisches Bindemittel, zugesetzt werden.

27. Verfahren nach Anspruch 25, dadurch gekennzeichnet, daß Ionenaustauscher auf der Basis von Polystyrol-Vinylharzen in anionischer oder kationischer Form in Mengen von 0,5 bis10 %, bezogen auf hydraulisches Bindemittel, zugesetzt werden.

28. Verfahren nach einem der Ansprüche 1 bis 27, dadurch gekennzeichnet, daß die Überführung der Mischungen in Formkörper unter Druck und/oder Temperatureinwirkung erfolgt.

29. Verfahren nach einem der Ansprüche 1 bis 28, dadurch gekennzeichnet, daß die Mischungen zu Granulaten, Aggregaten oder Betonzuschlägen verformt werden.

30. Verfahren nach einem der Ansprüche 1 bis 29, dadurch gekennzeichnet, daß alkalisch reagierende Verbindungen an der Oberfläche der erhaltenen Formkörper, insbesondere das Calciumhydroxid, durch Einwirkung von Flüssigkeiten z.B. Kohlensäure, Flußsäure, Oxalsäure,Lösungen von Carbonaten bzw. Bicarbonaten, Magnesiumsilikofluorid usw., oder von Gasen, z.B. Kohlendioxid, in unlösliche, neutral reagierende Calciumsalze übergeführt werden, z.B. in Calciumkarbonat, Calciumfluorid, Calciumoxalat und dgl., und/oder die Formkörper einem $CO_2$-haltigen Abgasstrom ausgesetzt werden und/oder die Formkörper mit einer dichtenden, die Wasseraufnahme herabsetzenden Oberflächenbehandlung, wie Tränkung, Anstrich, Überzug versehen werden, bestehend beispielsweise aus Kunststoff, Wachs, Bitumen, Imprägnierungsmittel, Hydrophobierungsmittel und dgl.

31. Verfahren nach Anspruch 30, dadurch gekennzeichnet, daß die Umwandlung der alkalisch reagierenden Verbindungen an der Oberfläche der Formkörper bei erhöhten Temperaturen über 30° C, insbesondere über 50° C und besonders bevorzugt über 70° C erfolgt.